Europäisches Patentamt

European Patent Office

Office européen des brevets

(19)

(11) Numéro de publication: **0 143 031**
**A2**

(12) **DEMANDE DE BREVET EUROPEEN**

(21) Numéro de dépôt: **84402076.8**

(22) Date de dépôt: **16.10.84**

(51) Int. Cl.⁴: **G 02 B 26/02**
**G 02 B 6/24**

(30) Priorité: **21.10.83 FR 8316793**

(43) Date de publication de la demande:
**29.05.85 Bulletin 85/22**

(84) Etats contractants désignés:
**DE GB NL SE**

(71) Demandeur: **THOMSON-CSF**
**173, Boulevard Haussmann**
**F-75379 Paris Cedex 08(FR)**

(72) Inventeur: **Le Pesant, Jean-Pierre**
**THOMSON-CSF SCPI 173, bld Haussmann**
**F-75379 Paris Cedex 08(FR)**

(72) Inventeur: **Hareng, Michel**
**THOMSON-CSF SCPI 173, bld Haussmann**
**F-75379 Paris Cedex 08(FR)**

(72) Inventeur: **Mourey, Bruno**
**THOMSON-CSF SCPI 173, bld Haussmann**
**F-75379 Paris Cedex 08(FR)**

(74) Mandataire: **Lepercque, Jean et al,**
**THOMSON-CSF SCPI 173, Bld Haussmann**
**F-75379 Paris Cedex 08(FR)**

(54) **Dispositif de commutation optique à commande électrique.**

(57) L'invention se rapporte à un dispositif où la commutation d'un faisceau lumineux (40) est assurée par la présence ou l'absence commandées électriquement, sur le trajet du faisceau, d'un fluide (29) provoquant sa transmission ou sa réflexion.

L'invention a pour objet d'améliorer le découplage entre les voies de sortie du dispositif par la présence d'une surface (36) provoquant une réflexion totale qui permet d'éliminer les réflexions parasites.

L'invention s'applique notamment à la commutation de faisceaux véhiculés par des fibres optiques (20, 21, 22).

FIG. 3

EP 0 143 031 A2

# DISPOSITIF DE COMMUTATION OPTIQUE A COMMANDE ELECTRIQUE

La présente invention se rapporte aux dispositifs de commutation rapide d'un faisceau lumineux, en particulier lorsque ce faisceau lumineux transporte des informations codées. Une des applications particulières de l'invention est la commutation de lumière entre des fibres optiques.

Parmi les dispositifs de l'art connu, on peut citer des structures où la déviation spatiale d'un faisceau optique est effectuée par des miroirs constitués par des lames semi-réfléchissantes qui introduisent des pertes et dont les dimensions ne sont pas négligeables (à peine inférieures au centimètre carré). On connaît également des dispositifs où la déviation de faisceaux lumineux est provoquée par la réflexion totale de la lumière dans des cristaux électro-optiques. L'inconvénient de ces dispositifs réside dans le cristal lui-même, en général du niobate de lithium qui, pour des questions de pureté, n'est disponible qu'en petites dimensions ce qui implique que le pas des électrodes qu'il supporte et qui servent à lui appliquer un champ électrique de commande soit très petit. Par conséquent, les dispositifs à cristaux électro-optiques nécessiteront des systèmes optiques importants. En outre, le cristal réagit faiblement au champ électrique ce qui implique des tensions de commande importantes.

En vue de résoudre ces problèmes, la Demanderesse a déposé le 4 Juillet 1983 une demande de brevet sous le numéro d'enregistrement national 83.11 074 et intitulée : "Dispositif de commutation optique à déplacement de fluide et dispositif de composition d'une ligne de points". Cette invention proposait d'utiliser les mouvements de très petits volumes de liquide, commandés électriquement, sans intervention d'organes mécaniques mobiles, pour modifier localement les conditions de réfraction rencontrées par les faisceaux lumineux qui se propagent dans le dispositif. Ces modifications de réfraction permettent de déplacer les trajets des faisceaux lumineux et de réaliser ainsi la commutation entre diverses voies de propagation, notamment entre des fibres optiques. Il est alors possible de réaliser des dispositifs de commutation comportant des moyens de commande électrique de déplacement de liquide qui permettent de faire couler de très petits volumes de ce liquide sous forme de lames ou de globules d'une région à une autre sous l'action de forces motrices d'origine électrique dues à des variations locales de champ électrique consécutives à l'application sur des électrodes de contrôle d'échelons de tension. La distance entre les électrodes d'application de champ électrique peut être, dans cette utilisation, de l'ordre de la dizaine de micromètres. Pour faciliter la réalisation pratique et pour ne pas diaphragmer excessivement les faisceaux lumineux, il est avantageux de disposer d'électrodes transparentes au rayonnement lumineux en question. Dans ce but, on peut utiliser par exemple des électrodes en oxyde mixte d'indium et d'étain (électrodes ITO) déposées sur du verre et gravées par microlithographie. L'inconvénient de cette solution est l'introduction d'interfaces supplémentaires, typiquement verre-électrode transparente et électrode transparente-fluide confiné (gaz ou liquide), et d'une couche (l'électrode transparente) généralement plus réfringente que son support et que le fluide confiné. La disparité des indices de réfraction des milieux traversés par les rayons lumineux entraîne l'existence de réflexions parasites qui sont gênantes pour les détections des niveaux des signaux et qui détériorent la diaphotie entre voies.

Afin de remédier à ces inconvénients, l'invention propose de protéger par réflexion totale les voies de sortie qui ne transmettent pas d'information ou qui transmettent une information différente de celle des voies adjacentes.

L'invention a donc pour objet un dispositif de commutation optique d'au moins un faisceau lumineux incident par des moyens commutateurs à commande électrique, les moyens commutateurs consistant à placer sur le trajet dudit faisceau soit un premier fluide provoquant la réflexion du faisceau, soit un second fluide provoquant sa transmission, le dispositif étant constitué de deux éléments formant des prismes à réflexion totale placés en vis-à-vis selon leur hypoténuse et définissant un espace de confinement contenant lesdits fluides, les fluides n'étant pas miscibles et possédant des permittivités diélectriques distinctes, le dispositif comprenant également des moyens inducteurs d'un gradient de champ électrique faisant converger le fluide ayant la plus forte permittivité vers une région de l'espace de confinement soumise au champ électrique, caractérisé en ce que l'un desdits prismes est tronqué de façon à présenter une face parallèle à l'espace de confinement et qu'au moins l'un des trajets optiques possibles pour le faisceau comporte au moins une réflexion totale sur ladite face parallèle, l'autre prisme extrayant le faisceau commuté.

L'invention sera mieux comprise et d'autres avantages apparaîtront au moyen de la description qui va suivre et des figures annexées parmi lesquelles :

- les figures 1 et 2 représentent schématiquement un disposistif de commutation optique selon l'art connu,

- les figures 3 et 4 représentent des dispositifs de commutation optique selon l'invention,

- les figures 5 et 6 se rapportent à un commutateur optique en cascade selon l'invention.

Le déplacement d'un ou plusieurs globules fluides d'une position à une autre et l'origine physique des forces qui permettent de provoquer et de contrôler ces déplacements ont été décrits dans une demande de brevet de la Demanderesse déposée le 23 Mars 1983 et portant le numéro d'enregistrement national 83.04 745.

Il est malgré tout utile de rappeler brièvement les phénomènes physiques qui interviennent dans les dispositifs à déplacement de lames liquides. Un dispositif à commande électrique de déplacement d'un fluide comporte un espace capillaire où l'on fait cohabiter au moins deux fluides diélectriques non miscibles. La hauteur de l'espace capillaire est choisie égale ou inférieure au millimètre afin que les phénomènes de capillarité prennent le pas sur les forces gravitationnelles. Des couples d'électrodes sont disposés sur les éléments qui définissent l'espace capillaire de façon à pouvoir agir sur les fluides présents dans cet espace. L'application de champs électriques dans l'espace capillaire, par l'intermédiaire des couples d'électrodes, engendre des forces motionnelles susceptibles de déplacer les fluides. L'origine physique des forces motionnelles s'explique par la présence au sein des milieux matériels de charges électriques positives et négatives qui peuvent être libres ou liées. En présence d'un champ électrique inducteur, les charges libres peuvent se déplacer dans l'ensemble du volume de matière soumis au champ électrique ce qui constsitue le phénomène de conduction électrique. Ce phénomène n'est pas exploité dans le cadre de la

4

présente invention bien qu'une faible conductivité des fluides utilisés puisse être acceptée. Par contre, les charges électriques liées aux atomes et molécules donnent naissance à des moments dipolaires électriques. Le milieu matériel réagit à un champ électrique inducteur par une polarisation électrique ce qui entraîne la création d'une force de déplacement volumique capable de vaincre les forces de rappel telles que les forces de tension superficielle.

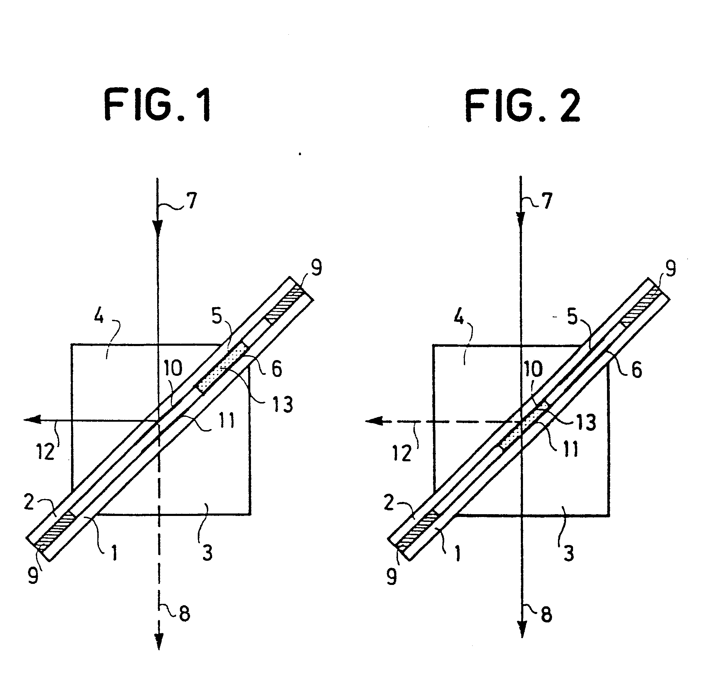

Les figures 1 et 2 sont des vues schématiques en coupe transversale d'un dispositif de commutation optique selon l'art connu. Le dispositif comprend deux plaques rigides de confinement 1 et 2, par exemple en verre, délimitant l'espace capillaire défini par les cales d'épaisseur 9. Les faces internes des plaques 1 et 2 ont subi une préparation qui consiste en des nettoyage appropriés et des dépôts de surface qui doivent éviter la formation de films capillaires par le liquide dont on souhaite contrôler électriquement le déplacement. Les électrodes de commande sont constituées du couple d'électrodes 5 et 6 et du couple d'électrodes 10 et 11. Elles sont reliées à un générateur de tension non représenté susceptible de fournir une différence de potentiel entre les électrodes de chaque couple. Le dispositif comprend un globule 13 à déplacer dans un second fluide qui peut être de l'air. Le globule 13 est choisi parmi les hydrocarbures tels que des alcanes comprenant de 5 à 25 atomes de carbone, des cétones ou des dérivés nitrés. Sur les faces extérieures des plaques 1 et 2 sont collés des prismes à réflexion totale 3 et 4. Un faisceau lumineux 7 est envoyé sous incidence oblique en direction de l'électrode 10. L'obliquité du faisceau 7 est choisie de façon à permettre la possibilité d'une réflexion totale sur la face interne de la lame 2. Le faisceau 7 traverse le prisme 4 et parvient sur la face interne de la lame 2. Deux cas peuvent alors se produire suivant la nature du fluide compris entre les électrodes 10 et 11.

Le faisceau 7 est réfléchi en un faisceau 12 lorsque le volume contrôlé par les électrodes 10 et 11 est occupé par un gaz tel que l'air dont l'indice de réfraction optique est de l'ordre de 1, alors que celui du verre de la lame 2 est de l'ordre de 1,5. C'est ce qui est représenté à la figure 1.

Si le volume contrôlé par les électrodes 10 et 11 est occupé par le globule 13 initialement situé entre les électrodes 5 et 6, l'indice de réfraction de cette région passe à une valeur qui est typiquement comprise entre 1,4 et 1,7. Dans ces conditions, la réflexion totale sur la face interne de la lame de verre 2 est supprimée et le faisceau 7 est transmis en un faisceau 8 comme le montre la figure 2.

La commande électrique du dispositif représenté aux figures 1 et 2 se fait de la façon suivante. Sans excitation électrique, le globule reste dans la position où il se trouve et le faisceau 7 est réfléchi en un faisceau 12 (c'est par exemple le cas de la figure 1). Si l'on applique une différence de potentiel entre les électrodes 10 et 11 et que le champ électrique qui y est alors induit est suffisant, le globule vient se placer entre ces électrodes et y restera après suppression du champ électrique. Le faisceau 7 est alors transmis en un faisceau 8. Pour que le globule reparte entre les électrodes 5 et 6, il faut inverser le processus de commande. C'est bien d'un dispositif de commutation optique à commande électrique dont on dispose.

Ce dispositif est formé par l'association de plusieurs éléments qui déterminent des interfaces qui, comme on le sait, favorisent les réflexions parasites. On peut diminuer le nombre des éléments composant le dispositif de commutation en gravant les électrodes directement sur les prismes. D'autre part, la gravure des électrodes peut être suffisamment mince pour ne pas introduire trop de perturbations. Ces réflexions sont particulièrement nuisibles lorsque le faisceau lumineux est transmis par l'intermédiaire d'un globule. En effet, l'adaptation d'indice, entre les divers éléments situés sur le trajet du faisceau lumineux à transmettre, n'étant pas parfaite, il existe des réflexions parasites aux interfaces globule-électrodes ou prismes. Dans ce cas, représenté à la figure 2, un faisceau lumineux incident 7 sera transmis en un faisceau de sortie 8 avec apparition d'un faisceau parasite 12 qui n'est pas négligeable dans toutes les applications.

Si le faisceau incident 7 est destiné à être commuté vers un faisceau 12 comme l'indique la figure 1, le problème d'un faisceau parasite ne se pose pas. En effet, si les prismes à réflexion totale sont bien réalisés, la quantité de lumière transmise vers une direction 8 est pratiquement nulle. Le problème à résoudre est donc l'élimination des réflexions parasites dans le cas d'un faisceau transmis par l'intermédiaire d'un fluide.

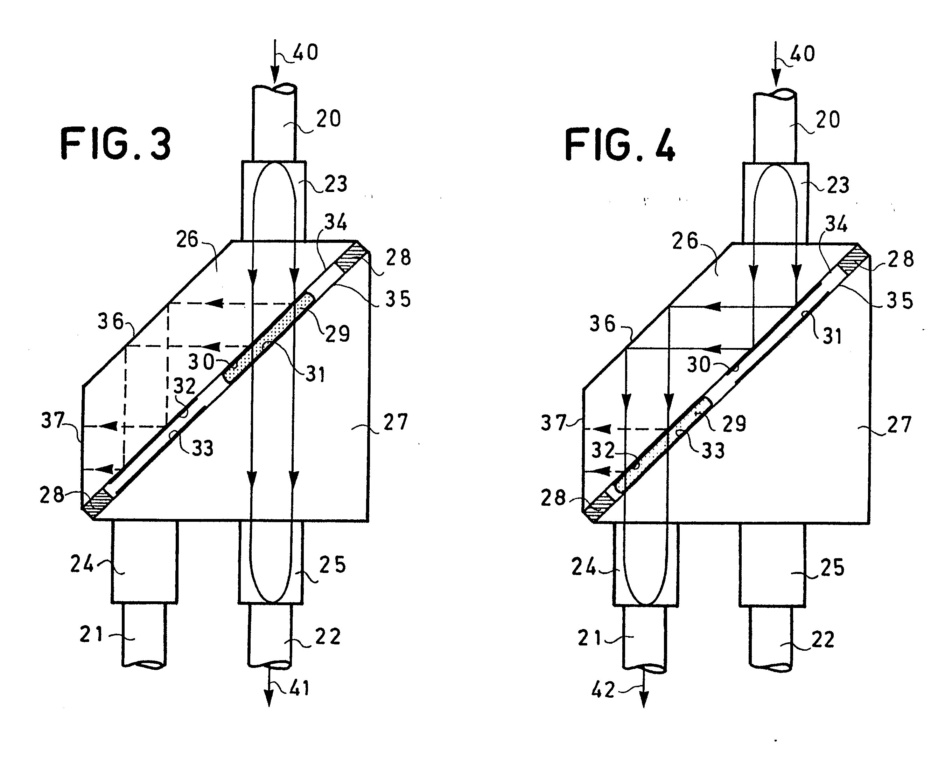

La figure 3 représente un dispositif de commutation optique selon l'invention. On a choisi de véhiculer les faisceaux lumineux entrant et sortant par des fibres optiques mais leurs trajets peuvent s'effectuer également dans l'air. Le dispositif de commutation optique proprement dit est formé par les prismes à réflexion totale 26 et 27 dont les faces 34 et 35, formant les faces internes du dispositif, définissent, par l'intermédiaire de cales d'épaisseur 28, l'espace capillaire où pourra être déplacé le globule 29 au sein d'une couche d'air. Les faces 34 et 35 supportent des électrodes transparentes : les électrodes 30 et 31 forment un premier couple d'électrodes, le second couple étant formé par les électrodes 32 et 33. Ces électrodes sont reliées à un générateur de tension non représenté qui fournira les tensions nécessaires à la commande du déplacement du globule 29. La différence essentielle avec le dispositif représenté aux figures 1 et 2 est constituée par la face 36 parallèle à la face 34 et qui coupe le sommet à angle droit du prisme 26. L'état de surface de la face 36 a été amélioré par polissage. Une autre différence, qui découle de la première, est le parallélisme des faisceaux lumineux d'entrée et de sortie. La fibre 20 amène le faisceau lumineux à commuter vers l'une des fibres de sortie 21 ou 22. Les faisceaux lumineux sont collimatés par des lentilles 23, 24 et 25 du type à gradient d'indice, collées sur les prismes à réflexion totale 26 et 27.

Dans le dispositif représenté à la figure 3, le globule 29 a été placé entre les électrodes 30 et 31 ou occupe cette position initialement. Le globule est constitué par un fluide du type cité plus haut. Il a un indice de réfraction voisin de celui des prismes. Dans ce cas, il y a transmission d'un faisceau lumineux 40 véhiculé par la fibre 20 vers la fibre 22 sous forme d'un faisceau lumineux 41 comme l'indiquent les lignes tracées en trait fin fléché. L'interface constituée par le prisme 26, l'électrode 30 et le globule 29 provoque l'existence de rayons lumineux parasites qui sont réfléchis dans une direction perpendiculaire au faisceau incident. L'interface constituée par le prisme 27, l'électrode 31 et le globule 29 peut également, dans une moindre mesure, produire des rayons parasites. Les rayons lumineux réfléchis par l'interface lame 26-globule 29 sont représentés par des traits en pointillés et fléchés. La face 36, inclinée à 45° par rapport aux rayons réfléchis par l'interface renvoie ceux-ci vers la face 34 qui de la même façon les renvoie vers la face 37 du prisme 26. En cet endroit, l'angle formé par les rayons réfléchis et la face 37 étant un angle droit, ceux-ci sortent du dispositif. On a ainsi réalisé un très bon découplage entre les fibres de sorties 21 et 22.

La figure 4 reprend le dispositif de commutation optique décrit précédemment et où les mêmes références représentent les mêmes éléments. Par commande électrique, le globule 29 a été amené entre les électrodes 32 et 33. Dans ce cas, un faisceau lumineux 40 véhiculé par la fibre optique 20 subit une réflexion totale sur la face 34 du prisme 26 si on admet que l'électrode 30 est suffisamment mince pour ne pas créer de perturbations sensibles. La réflexion sur la face 34 est d'autant mieux réalisée qu'il existe un saut d'indice entre le prisme 26 et l'espace situé entre les électrodes 30 et 31. La face 34 réfléchit donc le faisceau lumineux vers la face 36 qui le renvoie également en direction du globule 29, lequel va assurer la transmission de la lumière vers la fibre 21 qui va véhiculer un faisceau lumineux 42. Le trajet du faisceau lumineux dans le dispositif de commutation est représenté en trait fin fléché. Au niveau de l'interface entre le prisme 26 et la globule 29 il se produit, comme dans le cas représenté à la figure 3, une réflexion parasite. Cette réflexion parasite, représentée par des traits en pointillés fléchés sort du dispositif par la face 37. Le découplage entre les voies de sortie est encore une fois très bon.

Il entre également dans le cadre de l'invention de disposer plusieurs commutateurs en cascade pour avoir, à partir d'une fibre d'entrée, une possibilité d'accès à plusieurs fibres. Inversement, une telle structure permet l'accès à une fibre à partir de plusieurs fibres d'entrée tout en évitant les réflexions parasites.

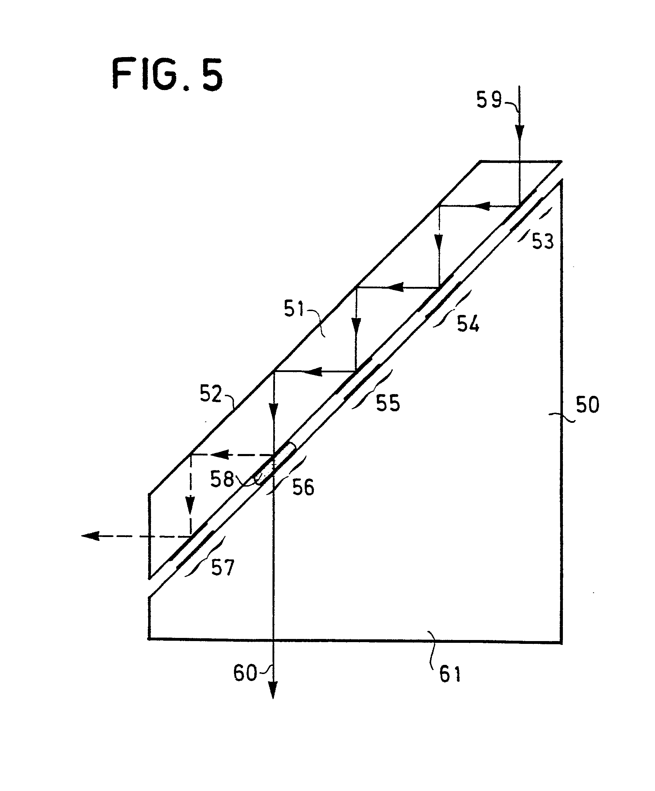

La figure 5 décrit schématiquement une structure de commutateur optique en cascade selon l'invention. La structure est formée par l'association de deux prismes à réflexion totale agencés de façon à satisfaire les conditions de propagation d'un faisceau lumineux comme il a été défini plus haut. Le prisme 50 et le prisme 51 dont le sommet a été tronqué et dont la face 52 a été polie, définissent un espace capillaire où un fluide est susceptible d'être déplacé par commande électrique. A cet effet, des électrodes, disposées par couples, sont gravées sur les faces internes des prismes. Pour une structure à cinq sorties, il faut disposer de cinq couples d'électrodes 53, 54, 55, 56 et 57. Par commande électrique un globule diélectrique 58 peut être déplacé successivement d'un couple d'électrodes à un autre couple pour aboutir entre le couple d'électrodes situé sur le trajet voulu du faisceau lumineux. La figure 5 montre un exemple de commutation possible pour un faisceau lumineux 59 entrant perpendiculairement à une face du prisme 51 et dont les conditions de réflexion totale sur la face interne de ce prisme sont respectées. Le faisceau lumineux subit une cascade de réflexions sur la face interne du prisme 51 et sur sa face 52 qui satisfait également aux conditions de réflexion totale. Le faisceau lumineux est transmis lorsque la continuité des indices de réfraction des milieux qu'il rencontre est assurée. C'est ainsi qu'il traverse le globule 58 situé entre le couple d'électrodes 56 pour constituer un faisceau 60 qui sort perpendiculairement à la face 61 du prisme 50. Les réflexions parasites de lumière, représentées en traits pointillés fléchés, se produisant à l'interface prisme 51-globule 58 sont alors évacuées hors du prisme 51 dans une direction autre que celles des sorties envisagées pour le faisceau lumineux. Pour obtenir un temps de réponse du dispositif aussi court que possible, on évite de déplacer le globule 58 sur toute la longueur de l'intervalle capillaire délimité par les prismes 50 et 51. Pour cela, on utilise des couples d'électrodes situés dans un plan perpendiculaire au plan de figure.

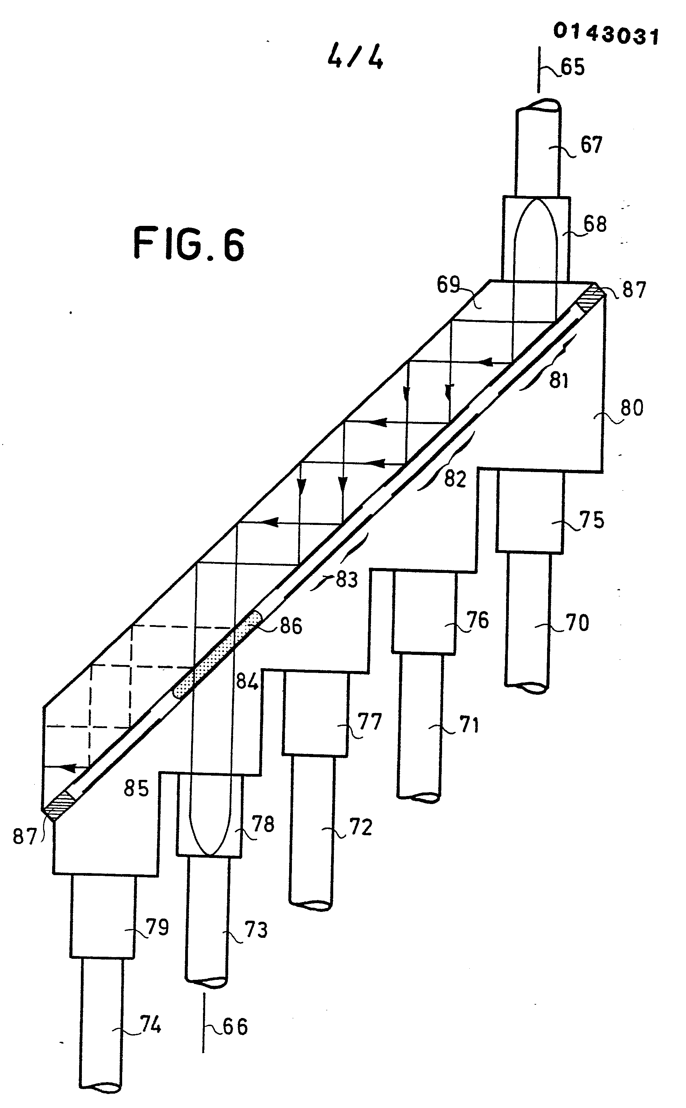

La figure 6 est une application pratique de la structure schématisée à la figure 5. Le faisceau lumineux entrant 65 est véhiculé par une fibre optique 67 et aborde le prisme tronqué 69 par l'intermédiaire de la lentille à gradient d'indice 68. Le faisceau lumineux sortant 66 peut être véhiculé par l'une des fibres 70 à 74 associées respectivement aux lentilles 75 à 79 collées sur le prisme 80. Le prisme 80 est taillé en cascade afin de réduire la longueur des chemins optiques et d'éviter les dispersions de lumière. Des couples d'électrodes 81 à 85 commandent le déplacement du globule 86 dans l'espace capillaire situé entre les prismes 69 et 80 et défini par les cales d'épaisseur 87. Dans le dispositif représenté à la figure 6, le globule 86 se déplace d'un couple d'électrodes à un autre par étapes successives. Par exemple, pour déplacer le globule du couple d'électrodes 81 au couple 85, il faut le faire transiter par les couples 82, 83 et 84. Une variante de déplacement est celle décrite ci-dessus pour la figure 5.

Cette structure de commutateur correspond aux distributeurs avec éventuellement fractionnement de l'énergie lumineuse entrante vers plusieurs fibres de sortie. L'une des façons possibles pour fractionner l'énergie lumineuse consiste à ne transmettre qu'une partie d'un faisceau lumineux incident par l'intermédiaire d'un globule, l'autre partie étant réfléchie vers un autre échelon de la cascade qui à son tour transmet une partie du faisceau incident et réfléchit l'autre partie vers l'échelon suivant de la cascade. Ceci peut être réalisé en ne remplissant pas complètement l'espace compris entre un couple d'électrodes : la partie du faisceau lumineux rencontrant le globule est transmise, le reste du faisceau étant réfléchi. On peut par exemple transmettre la moitié de l'énergie d'un faisceau lumineux vers une fibre et l'autre moitié vers une autre fibre. On peut également, en jouant sur les surfaces des électrodes, transmettre et réfléchir des fractions déterminées d'un faisceau lumineux incident.

Inversement, on peut accéder à une même fibre optique à partir de plusieurs fibres. Ce cas correspond par exemple au service d'un abonné qui demande des données à une banque parmi plusieurs ou un programme vidéo dans un choix de plusieurs programmes.

# REVENDICATIONS

1. Dispositif de commutation optique d'au moins un faisceau lumineux incident (40) par des moyens commutateurs à commande électrique, les moyens commutateurs consistant à placer sur le trajet dudit faisceau soit un premier fluide provoquant la réflexion du faisceau, soit un second fluide provoquant sa transmission, le dispositif étant constitué de deux éléments formant des prismes à réflexion totale (26, 27) placés en vis-à-vis selon leur hypoténuse et définissant un espace de confinement contenant ·lesdits fluides, les fluides n'étant pas miscibles et possédant des permittivités diélectriques distinctes, le dispositif comprenant également des moyens inducteurs d'un gradient de champ électrique faisant converger le fluide ayant la plus forte permittivité vers une région de l'espace de confinement soumise au champ électrique, caractérisé en ce que l'un desdits prismes (26) est tronqué de façon à présenter une face (36) parallèle à l'espace de confinement et qu'au moins l'un des trajets optiques possibles pour le faisceau comporte au moins une réflexion totale sur ladite face parallèle, l'autre prisme (27) extrayant le faisceau commuté.

2. Dispositif de commutation optique selon la revendication 1, caractérisé en ce que lesdits moyens inducteurs comprennent au moins deux couples d'électrodes (30, 31 et 32, 33), chaque couple formant condensateur, lesdits fluides jouant le rôle de diélectriques par rapport aux couples d'électrodes.

3. Dispositif de commutation optique selon l'une des revendications 1 ou 2, caractérisé en ce que ladite face parallèle (36) est polie.

4. Dispositif de commutation optique selon l'une quelconque des revendications 1 à 3, caractérisé en ce que le premier fluide est de l'air, le second fluide étant un hydrocarbure.

5. Dispositif de commutation optique selon l'une quelconque des revendications 1 à 4, caractérisé en ce que les faisceaux lumineux incident et commuté sont véhiculés par des fibres optiques (20, 21, 22).

6. Dispositif de commutation optique selon la revendication 5, caractérisé en ce qu'il est prévu de placer des lentilles à gradient d'indice (23, 24, 25) pour assurer la liaison optique entre les fibres optiques et les éléments définissant l'espace de confinement.

7. Dispositif de commutation optique selon l'une quelconque des revendications 1 à 6, caractérisé en ce que le prisme d'extraction (80) possède une structure en cascade afin de réduire le trajet optique du faisceau commuté (66).

FIG.1  FIG.2

0143031

1/4

**FIG. 3**

**FIG. 4**

0143031

# FIG. 5

0143031

# FIG.6